# EUROPÄISCHE PATENTANMELDUNG

(11) **EP 0 620 412 A1**
(43) Veröffentlichungstag der Anmeldung: **19.10.1994**
(21) Anmeldenummer: 94105230.0
(22) Anmeldetag: 02.04.1994
(51) Int. Cl.: G01B 3/10, G01B 3/02, G01B 5/00, G01B 5/20

(54) **Vorrichtung zum Zusammenfassen mehrerer Messbandanfänge**

(30) Priorität: 10.04.1993 DE 4311946
(71) Anmelder: Meywald, Volker, Dipl.-Ing., D-34454 Arolsen (DE)
(72) Erfinder: Meywald, Volker, Dipl.-Ing., D-34454 Arolsen (DE)
(74) Vertreter: Rehberg, Elmar, Dipl.-Ing.

(57) **Zusammenfassung**

Eine Vorrichtung zum Zusammenfassen mehrerer Meßbandanfänge beim Anpeilen eines im Raum zu vermessenden Punktes weist einen der Handhabung dienenden Grundkörper 1 auf, an dem eine kreisbogenförmig um eine Achse verlaufende Bahn zum Befestigen der entsprechend gekürzten Meßbandanfänge angeordnet ist. Am Grundkörper 1 ist ein in einer Spitze 5 zum Aufsetzen auf den zu vermessenden Punkt 6 endender Schaft 2 vorgesehen. Für jeden Meßbandanfang ist eine gesonderte, auf einer Kugelschale 12, 13, 14 bewegliche Bahn 21, 22, 23 vorgesehen. Die Bahnen auf den Kugelschalen weisen unterschiedliche Radien um einen gemeinsamen, mit der Spitze 5 des Schaftes 2 zusammenfallenden Kugelmittelpunkt auf. Die Meßbandanfänge sind entsprechend den unterschiedlichen Radien unterschiedlich gekürzt.

## Beschreibung

Die Erfindung bezieht sich auf eine Vorrichtung zum Zusammenfassen mehrerer Meßbandanfänge beim Anpeilen eines im Raum zu vermessenden Punktes, mit einem der Handhabung dienendem Grundkörper, an dem eine kreisbogenförmig um eine Achse verlaufende Bahn zum Befestigen der entsprechend gekürzten Meßbandanfänge angeordnet ist. Für einen im Raum nach drei Koordinaten x, y und z zu vermessenden Punkt kann bekanntlich ein Schnittverfahren angewendet werden, bei dem von drei Fixpunkten aus mit bekannten Koordinaten - möglichst unter Vermeidung von schleifenden Schnitten - drei zu dem zu vermessenden Punkt führende Strecken gemessen und aus diesen Meßergebnissen die Koordinaten des Punktes errechnet werden. Es sind mindestens drei Meßbänder vorgesehen, die körperlich ausgebildet sind und entweder tatsächlich aus einem mit einer Maßeinteilung bedruckten bandförmigen Träger oder aus einem Seil, einem Zahnriemen o. dgl. bestehen können. Jedes Meßband dieser Art führt von einem Bezugspunkt mit bekannte Koordinaten zu dem zu vermessenden Punkt. Damit die drei Strecken zwischen den Bezugspunkten und dem zu messenden Punkt möglichst exakt ermittelbar sind, müssen die Meßbandanfänge mindestens drei Meßbänder im Bereich des zu vermessenden Punktes so zusammengefaßt werden, daß ihre Null-Anfänge möglichst mit dem zu vermessenden Punkt zusammenfallen und sich die Meßbänder jeweils in gestreckter Lage zwischen dem zu vermessenden Punkt und dem Bezugspunkt befinden.

Es ist eine Vorrichtung der eingangs beschriebenen Art bekannt, bei der der Grundkörper als Handgriff ausgebildet ist. Am einen Ende des Handgriffes befindet sich eine Peilöse in Form eines runden Ringkörpers, der am freien Ende eines Schaftes befestigt ist. Der runde Ringkörper ist von einem zweiten ebenfalls kreisbogenförmig verlaufenden Ringkörper umgeben, und zwar so, daß die Achsen der beiden Ringkörper zusammenfallen. In den äußeren Ringkörper können z. B. vermittels Karabinerhaken entsprechend gekürzte Meßbandanfänge eingehängt werden, wobei die Meßbänder zu den Basispunkten führen. Jeder Meßbandanfang ist dabei so gekürzt, daß der Radius des äußeren Ringkörpers sowie die effektive Länge des Karabinerhakens in Abzug kommen bzw. berücksichtigt sind, so daß bei gestreckter Lage der Meßbänder die effektiven Null-Anfänge der Meßbänder im Mittelpunkt der kreisbogenförmigen Ringkörper zusammenfallen. Die Kürzung der Meßbänder - oder auch Verlängerung - kann auch körperlos in einem Rechner erfolgen. Eine genaue Messung mit dieser bekannten Vorrichtung ist jedoch nur in dem einzigen Spezialfall möglich, wenn sich der zu vermessende Punkt im Mittelpunkt der konzentrischen Ringkörper befindet und sich die Meßbänder ausgestreckt in der durch die beiden Ringkörper definierten Ebene befinden. In der Regel ist jedoch der zu vermessende Punkt und dessen Umgebung so gestaltet, daß dies nicht möglich ist. Aus diesem Grunde wird der innere Ringkörper zu Peilzwecken benutzt, indem die Vorrichtung in eine mehr oder weniger entfernt von dem zu messenden Punkt befindliche Relativlage gebracht und durch Peilung festgehalten wird, um dabei die drei Strecken zwischen den Basispunkten und dem angepeilten zu vermessenden Punkt zu ermitteln, freilich mit entsprechenden Fehlern. Es treten Winkelfehler auf, da die drei Meßbänder in ihrer gestreckten Lager mehr oder weniger geneigt zu der durch die Ringkörper definierten Ebene vorgesehen sind. Allein diese Winkelfehler können ohne weiteres zwischen 5 und 20 mm betragen. Dazu kommen weiterhin Peilungsfehler sowie solche Fehler, die sich aus der Nicht-Übereinstimmung des zu vermessenden Punktes mit dem Mittelpunkt der Ringkörper ergeben. Auch Reibungsfehler treten auf; es kann nicht davon ausgegangen werden, daß sich jedes Meßband in der gestreckten Lage bei der Messung in einer solchen Relativlage zu der Vorrichtung bzw. dem äußeren Ringkörper befindet, daß die gedachte Verlängerungslinie des Meßbandes durch den Mittelpunkt der Ringkörper geht.

Bei einer weiteren bekannte Vorrichtung zum Zusammenfassen mehrerer Meßbandanfänge sind die Meßbandanfänge ebenfalls gleichmäßig gekürzt und durch vergleichsweise dünne Drahtseile verlängert, wobei die Drahtseile im Bereich eines Grundkörpers in axialer Richtung auf dem Umfang eines Schaftes aufgelegt und durch eine Art Schelle gehalten sind. Die Drähte sind jedoch lose von der Schelle gehalten, damit Winkeländerungen der Meßbänder zu den Basispunkten, wie sie beim Vermessen mehrerer Punkte nacheinander bei konstanten Basispunkten auftreten, möglich sind. Die auf diese Art und Weise verlängerten Meßbänder sind damit axial entfernt von der geometrischen Achse des Grundkörpers bzw. Stabes gehalten. Bei einer solchen Vorrichtung ergeben sich Winkelfehler in zweifacher Hinsicht. Durch die lose Führung der Drähte an der Schelle verlagern sich die Biegepunkte der Drähte bei Winkelveränderungen relativ über den Umfang der Schelle. Da die Drähte nicht bis zur geometrischen Achse des Grundkörpers bzw. der Schelle reichen können, ergeben sich unterschiedliche Abstände zu dieser geometrischen Achse, je nach dem Winkel, den das gestreckte Meßband zu der Achse des Grundkörpers einnimmt. Auch hier wirken sich Reibungsfehler zusätzlich nachteilig aus.

Der Erfindung liegt die Aufgabe zugrunde, eine Vorrichtung der eingangs beschriebenen Art bereitzustellen, die die Möglichkeit bietet, die Meßfehler zu reduzieren. Es soll sich die Möglichkeit eröffnen, bei einer Meßlänge jedes Meßbandes von 10 m auf +/- 1 mm genau zu messen. Dies soll für unterschiedliche Winkellagen möglich sein, wobei Punkte vermessen werden sollen, die sich auf einer ebenen, einer konkaven, einer konvexen oder auch einer sonstwie unregelmäßigen Meßoberfläche befinden.

Erfindungsgemäß wird dies bei einer Vorrichtung der eingangs beschriebenen Art dadurch erreicht, daß am Grundkörper ein in einer Spitze zum Aufsetzen auf den zu vermessenden Punkt endender Schaft vorgesehen ist, daß für jeden Meßbandanfang eine gesonderte, auf einer Kugelschale bewegliche Bahn vorgesehen ist, daß die Bahnen auf den Kugelschalen unterschiedliche Radien um einen gemeinsamen, mit der Spitze des Schaftes zusammenfallenden Kugelmittelpunkt aufweisen, und daß die Meßbandanfänge entsprechend den unterschiedlichen Radien unterschiedlich gekürzt sind.

Die Erfindung geht von der Vorstellung mehrerer konzentrischer Kugelschalen aus, die mit einem gemeinsamen Mittelpunkt angeordnet sind, wobei die Spitze des Schaftes mit diesem Mittelpunkt zusammenfällt oder jedenfalls in eine solche Lage verbracht werden kann, daß sie sich in dem Mittelpunkt der gedachten Kugelschalen befindet. Damit ist es zunächst einmal möglich, in vielen Fällen - je nach der Gestaltung der Umgebung des zu messenden Punktes - die Spitze des Schaftes direkt auf den zu messenden Punkt aufzusetzen, so daß Peilfehler in Fortfall kommen. Es ist dabei auch gleichgültig, in welcher Relativlage sich die Achse des Schaftes beispielsweise zur Horizontalebene befindet. Nach dem Prinzip der gedachten Kugelschalen ergeben sich hier keine Abweichungen. Wichtig ist es, für sämtliche Meßbandanfänge nicht eine gemeinsame Bahn vorzusehen, wie im Stand der Technik, sondern jedem einzelnen Meßbandanfang je eine gesonderte Bahn zuzuordnen, die auf je einer Kugelschale verläuft. Freilich müssen die Bahnen so beweglich auf den gedachten Kugelschalen angeordnet sein bzw. mit diesen zusammenfallen, daß die jeweilige gestreckte Lage jedes Meßbandes zu seinem Basispunkt so möglich ist, daß die gedachte Verlängerung des Meßbandes in seinen Null-Anfang hinein mit dem Mittelpunkt der gedachten Schar von Kugelschalen übereinstimmt. Damit entfallen dann auch Winkelfehler, und es wird eine erstaunlich hohe Genauigkeit der Messung möglich. Da sich die einzelnen Bahnen der gedachten Kugelschalen auf unterschiedlichen Radien zum gemeinsamen Mittelpunkt befinden, müssen die Meßbandanfänge unterschiedlich gekürzt werden, es sei denn, es werden Zwischenstücke verwendet, die die jeweiligen Unterschiede ausgleichen. Zwar werden bei der neuen Vorrichtung Reibungsfehler nicht beseitigt, jedoch ist es möglich, durch andere Maßnahmen solche Reibungsfehler relativ klein zu halten.

Vorzugsweise sind die Bahnen auf Armen angeordnet, die durch Meridianausschnitte aus den Kugelschalen gebildet sind; die Arme sind mit Lagerringen fest verbunden, die am Grundkörper um die Achse des Schaftes durch seine Spitze drehbar gelagert sind. Bei dieser Ausführungsform ergibt sich eine relativ einfache Formgebung für die Arme, die kreisbogenförmig verlaufen können. Die Arme bilden damit nur einen Teil der Kugelschale nach. Bei der Drehung der Arme um die Achse des Schaftes beschreiben die Bahnen die gedachten Kugelschalen bzw. einen Teil derselben. Durch die Lagerung der Bahnen an den Lagerringen bekommt die Vorrichtung die notwendige Stabilität. Sie läßt sich ungezwungen und sicher handhaben, und zwar nicht nur von oben nach unten durch Aufsetzen der Spitze des Schaftes auf den zu vermessenden Punkt, sondern auch beim Überkopfmessen oder auch beim Messen in Schräglage.

Der die Spitze tragende Schaft kann am Grundkörper in Richtung seiner Achse zwischen Anschlägen begrenzt verschiebbar gelagert sein, wobei ein Anschlag zur Fixierung der Spitze des Schaftes im Mittelpunkt der Kugelschalen vorgesehen ist. Damit wird dem Benutzer beim Aufsetzen der Spitze auf den zu vermessenden Punkt und durch die nachfolgende begrenzte Axialverschiebung des Schaftes angezeigt, wann sich die Spitze des Schaftes exakt im Mittelpunkt der gedachten Schar von Kugelschalen befindet, so daß dann die Messung durchgeführt werden kann.

Der durch die Anschläge festgelegte begrenzte Hub des die Spitze tragenden Schaftes ist zweckmäßig vom Mittelpunkt der Kugelschalen aus in Richtung auf die dem Grundkörper abgewandte Seite vorgesehen. Damit ergeben sich Vorteile in der Handhabung sowie die Möglichkeit, die Spitze des Schaftes auch auf solche zu vermessende Punkte aufzusetzen, die sich innerhalb einer konkaven Oberfläche befinden. Freilich fällt dabei dann die Spitze des Schaftes mit dem Mittelpunkt der Schar der Kugelschalen nicht mehr überein. Der entsprechende Abstand muß bei der Messung und der nachfolgenden Rechnung der Koordinaten des zu vermessenden Punktes berücksichtigt werden.

Der den Hub des die Spitze tragenden Schaftes im Mittelpunkt der Kugelschalen begrenzende Anschlag kann mit einem Kontakt zum Auslösen der Speicherung der Meßergebnisse der Meßbänder versehen sein. Auch dies steigert die Meßgenauigkeit und wirkt einer Manipulation entgegen. Die drei Meßergebnisse können automatisch mit dem Kontakt durch Schließen eines Stromkreises o. dgl. gleichzeitig abgespeichert werden, so daß sich eine hohe Genauigkeit ergibt.

Andererseits kann ein Wegaufnehmer zum Feststellen der jeweiligen Entfernung der Spitze des Schaftes vom Mittelpunkt der Kugelschale vorgesehen sein. Dies ist sinnvoll bei solchen zu vermessenden Punkten, die sich innerhalb einer konkaven Oberfläche befinden, so daß dabei die Spitze des Schaftes nicht gleichzeitig auf den zu vermessenden Punkt und in dem Mittelpunkt der Kugelschalen angeordnet werden kann. Für diesen Fall ist es zweckmäßig, an der Vorrichtung bzw. an dem Grundkörper eine oder mehrere Libellen vorzusehen, um eine vertikale Ausrichtung der Achse des Schaftes während der Messung zu ermöglichen und so festzulegen, daß sich die Spitze des Schaftes auf den zu vermessenden Punkt aufsetzt und sich der Mittelpunkt der Kugelschalen vertikal oberhalb oder unterhalb des zu vermessenden Punktes befindet.

Zwischen den Bahnen der Kugelschalen und den Meßbandanfängen können Koppelglieder vorgesehen sein, die mit ihren dem Mittelpunkt der Kugelschalen zugekehrten Enden rollend oder gleitend auf der jeweiligen Bahn jedes Armes gelagert sind und mit ihren anderen Enden in einer gemeinsamen Kugelschale um den Mittelpunkt enden. Damit wird es dann möglich, daß die Meßbänder selbst um den gleichen Betrag gekürzt sind und der Unterschied zwischen dem jeweiligen Radius der Bahnen der Kugelschalen und dem Radius der gemeinsamen Kugelschale durch die Länge der Koppelglieder ausgeglichen wird. Dabei ergibt sich der weitere Vorteil, daß die eigentlichen Meßbänder an den Koppelgliedern auch vertauscht eingehängt oder sonstwie befestigt werden können, ohne daß dabei das Meßergebnis verfälscht wird. Dies ist besonders sinnvoll, wenn innerhalb einer Meßfolge Punkte sowohl von oben nach unten als auch überkopf gemessen werden müssen.

Die Arme auf den Kugelschalen können jeweils einen das Durchschwenken der an die Bahnen angeschlossenen Meßbänder zulassenden gegenseitigen Abstand aufweisen. Auch dies dient der erleichterten Durchführung einer Meßfolge aus zu vermessenden Punkten, die von oben nach unten und beispielsweise überkopf gemessen werden müssen. Die Basispunkte, die in der Regel ortsfest angeordnet sind und mit den Meßbändern verbunden sind, verbleiben an Ort und Stelle; es ist nicht erforderlich, bei dieser Meßfolge Meßbänder an der Vorrichtung umzuhängen.

Die Arme auf den Kugelschalen bzw. auf den Lagerringen können sich etwa über einen Winkel von 90° erstrecken. Wenn sich die Arme exakt über 90° erstrecken, enden sie gleichsam in der Äquatorebene der Schar von Kugelschalen, so daß das Aufsetzen der Vorrichtung auf zu vermessende Punkte an einer ebenen Fläche besonders einfach wird.

Der die Spitze tragende Schaft kann gegen den Druck einer Feder am Grundkörper gelagert sein, wobei die Kraft der Feder die Spitze des Schaftes von dem Mittelpunkt der Kugelschalen weg belastet. Dies erbringt den Vorteil, daß die Spitze beim Aufsetzen auf einen zu vermessenden Punkt gleichsam automatisch und sinnfällig in den Mittelpunkt der Kugelschalen überführt wird, und zwar gegen den Druck der den Schaft belastenden Feder, so daß andererseits ein sicheres Aufsetzen und Halten der Spitze des Schaftes an dem zu vermessenden Punkt möglich ist.

Die Erfindung wird anhand bevorzugter Ausführungsbeispiele weiter erläutert und beschrieben. Es zeigen:
- Figur 1: eine Seitenansicht einer ersten Ausführungsform der Vorrichtung, teilweise geschnitten,
- Figur 2: eine Ansicht der Vorrichtung gemäß Figur 1 von unten,
- Figur 3: eine Seitenansicht einer zweiten Ausführungsform und
- Figur 4: eine Einzelheit an einer dritten Ausführungsform der Vorrichtung.

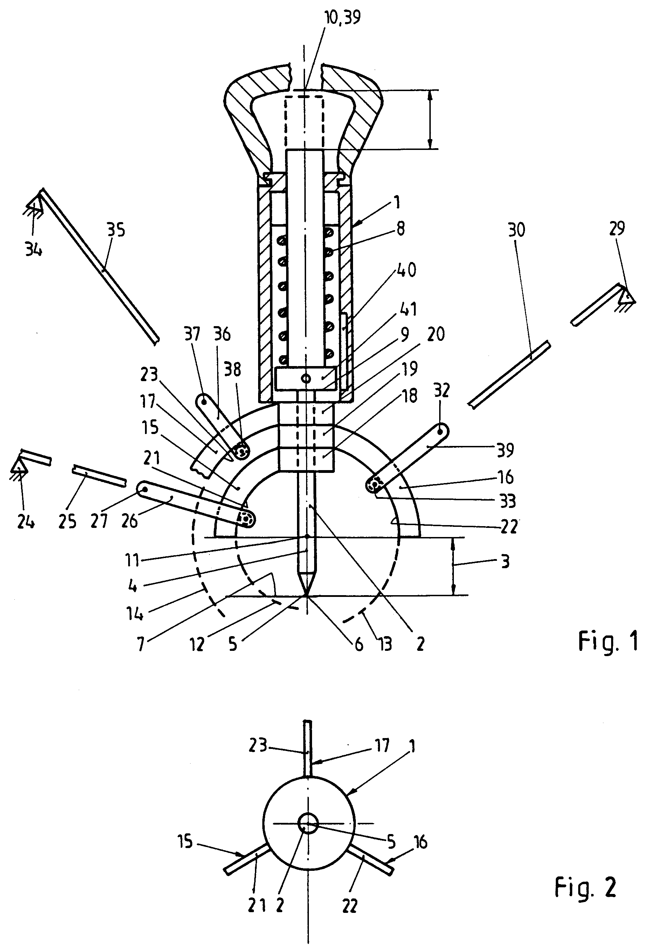

Die in den Figuren 1 und 2 dargestellte Vorrichtung weist einen Grundkörper 1 auf, der nach Art eines Handgriffes, eines Knopfes o. dgl. ausgebildet sein kann und dazu dient, die Vorrichtung manuell zu ergreifen, zu führen und zu handhaben. In dem Grundkörper 1 und teilweise aus diesem herausschauend ist ein Schaft 2 verschiebbar in Richtung des Doppelpfeils 3 begrenzt verschiebbar gelagert. Der Schaft 2 weist eine Achse 4 und an seinem freien Ende eine Spitze 5 auf. Die Achse 4 des Schaftes 2 fällt mit der Achse des Grundkörpers 1 zusammen. Dies ist jedoch nicht zwingend.

Die Spitze 5 des Schaftes 2 wird beim Messen auf den zu vermessenden Punkt 6, der Bestandteil einer Oberfläche 7 ist, so aufgesetzt, daß die Spitze 5 genau auf dem zu messenden Punkt 6 bzw. in diesem eingesetzt ist. Der Schaft 2 ist von der Kraft einer Feder 8 mit dem durch den Doppelpfeil 3 angedeuteten begrenzten Hub relativ zum Grundkörper 1 verschiebbar gelagert, wobei die in Figur 1 dargestellte Stellung die maximal ausgefahrene Stellung des Schaftes 2 wiedergibt, die durch einen Anschlag 9 zwischen Schaft 2 und Grundkörper 1 begrenzt wird. Am Grundkörper 1 ist ein weiterer Anschlag 10 so vorgesehen, daß dieser die Zurückschiebung des Schaftes 2 in den Grundkörper 1 hinein derart begrenzt bzw. festlegt, daß die Spitze 5 des Schaftes 2 mit einem Mittelpunkt 11 einer Schar von gedachten Kugelschalen 12, 13, 14 zusammenfällt. Sämtliche Kugelschalen 12, 13, 14 besitzen den gemeinsamen Mittelpunkt 11. Die Anzahl der Kugelschalen 12, 13, 14 mit unterschiedlichen Radien beträgt mindestens 3, kann aber auch mehr betragen.

Jeder gedachten Kugelschale 12, 13, 14 ist je ein Arm 15, 16, 17 zugeordnet. Der Arm 15 ist an einem Lagerring 18 befestigt. Der Arm 16 sitzt an einem Lagerring 19, und der Arm 17 ist mit einem Lagerring 20 verbunden. Die Lagerringe 18, 19 und 20 sind am Grundkörper 1 um die Achse 4 getrennt und unabhängig voneinander schwenkbar angeordnet. Bei einer solchen Verschwenkbewegung beschreibt eine Bahn 21 auf der Innenseite des Armes 15 eine Bewegung, die genau auf einem Teil der Kugelschale 12 verläuft. Anders gesagt wird durch eine solche Rotationsbewegung der Bahn 21 des Armes 15 um die Achse 4 ein Teil der Kugelschale 12 erzeugt. Analog wird eine Bahn 22 am inneren Umfang des kreisbogenförmig und nach Art einer Platte ausgebildeten Armes 16 auf einem Teil der gedachten Kugelschale 13 bewegt. Der Arm 17 schließlich, der mit dem Lagerring 20 verbunden ist, weist auf seiner Innenseite eine Bahn 23 auf, die bei einer Schwenkbewegung um die Achse 4 auf der Kugelschale 14 umläuft.

Von einem Basispunkt 24 führt ein körperlich ausgebildetes Meßband, welches auch als Seil, Zahnriemen o. dgl. ausgebildet sein kann, zu einem Koppelglied 26. Das Meßband 25 wird mit seinem freien Ende an einem Befestigungspunkt 27 an dem Koppelglied 26 eingehängt oder sonstwie befestigt. Das Meßband 25 weist einen gekürzten Anfang auf, so daß der Null-Anfang des Meßbandes 25 in seiner gedachten Verlängerung liegt und mit dem Mittelpunkt 11 der Schar von Kugelschalen 12, 13, 14 zusammenfällt. Die Kürzung des Meßbandes 15 ergibt sich aus der Summe des Radius vom Mittelpunkt 11 zur Kugelschale 12 und der wirksamen Länge des Koppelgliedes 26. Das Koppelglied 26 weist auf seinem dem Mittelpunkt 11 zugekehrten Ende eine Rolle 28 auf, mit der es unter Rollreibung an der Bahn 21 des Armes 15 entlangläuft. Das Koppelglied 26 kann zwei Laschen aufweisen, die den Arm 15 umfassen und über die Achse der Rolle 28 einerseits sowie dem Befestigungspunkt 27 andererseits verbunden sind. Eine leichtgängige Rollreibung ist sehr sinnvoll für die Vorrichtung, wenngleich auch anstelle der Rolle 28 ein Bolzen, ein Gleitstein o. dgl. für eine Gleitreibung an der Bahn 21 vorgesehen sein könnte.

Von einem zweiten Basispunkt 29 führt ebenso ein Meßband 30 zu einem Koppelglied 31 bzw. dessen Befestigungspunkt 32. Am inneren Ende des Koppelgliedes 31 ist auch hier eine Rolle 33 vorgesehen, die an der Bahn 22 des Armes 16 entlangläuft, wenn das Meßband 30 zum Basispunkt 29 Winkeländerungen ausführt.

Auch für einen dritten Basispunkt 34 ist ein Meßband 35 vorgesehen, welches zu dem Koppelglied 36 führt und an dessen Befestigungspunkt 37 eingehängt ist. Auch hier ist am inneren Ende des Koppelgliedes 36 eine Rolle 38 vorgesehen, die auf der Bahn 23 des Armes 17 bei Winkelbewegungen entlangläuft.

Die Basispunkte 24, 29, 34 sind in der Regel stationär und damit ortsfest vorgesehen, wenn die Vorrichtung als Bestandteil einer stationären Meßanlage eingesetzt wird. Es ist aber auch möglich, die Vorrichtung im Rahmen einer fahrbaren, also ortsveränderlichen Anlage zu nutzen, wobei dann bei einer durchzuführenden Messung die Basispunkte 24, 29, 34 auch unterschiedlich positioniert werden können. Die Koordinaten der Basispunkte 24, 29, 34 müssen dann durch zyklische Vertauschung beim Messen zunächst erst festgestellt und ermittelt werden.

Der Anschlag 10 an dem Grundkörper 1 kann zugleich als ein Kontakt 39 ausgebildet sein, dessen beide Kontaktpunkte mit elektrischen Leitungen verbunden und ansonsten gegeneinander isoliert sind. Es ist dann möglich, durch Anlage des oberen Endes des Schaftes 2 an dem Kontakt 39 den Stromkreis zu überbrücken und eine Messung dergestalt auszulösen, daß die drei Strecken zwischen dem Mittelpunkt 11 bzw. dem zu messenden Punkt 6 und den Basispunkten 24, 29 und 34 zugleich festgehalten und gespeichert werden. Die auftretenden Meßfehler sind äußerst gering. Winkelfehler können sich praktisch nicht mehr einstellen, weil die Arme 15, 16, 17 getrennt voneinander beweglich sind und jede Relativlage auf den zugeordneten Kugelschalen 12, 13, 14 einnehmen können. Andererseits ist aber durch die Rollen 28, 33 und 38 dafür gesorgt, daß bei entsprechender Zugaufbringung auf die Meßbänder 25, 30, 35 sich die Koppelglieder 26, 31, 36 mit den Meßbändern in eine jeweils gestreckte Lage begeben, so daß in jeweils gedachter geraden Linie die Basispunkte 24, 29, 34 jeweils mit dem Mittelpunkt 11 und dem dann in diesem liegenden Punkt 6 befinden.

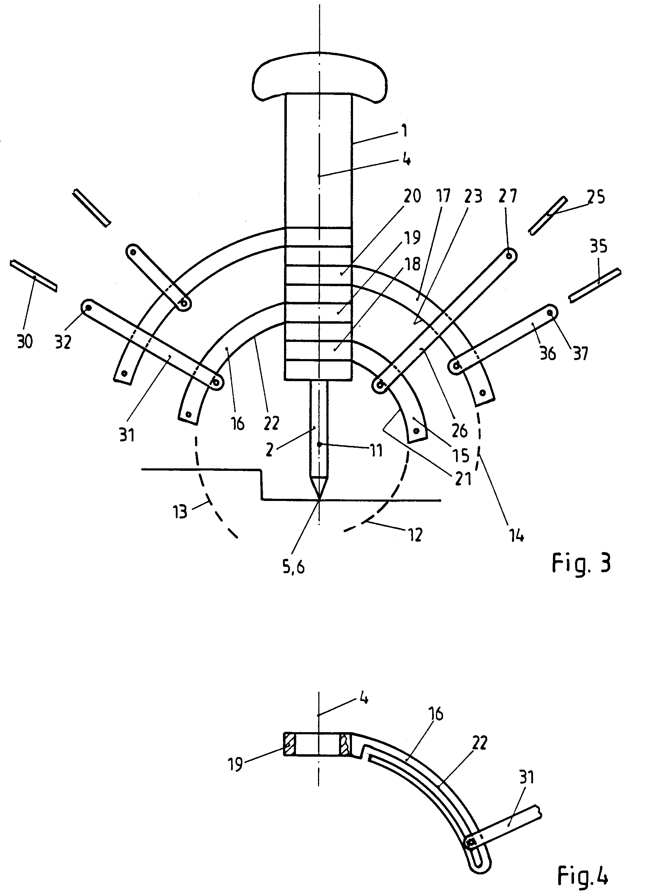

Bei der in Figur 3 dargestellten Ausführungsform ist das gleiche Grundprinzip verwirklicht. Neben den drei Armen 15, 16, 17 ist noch ein weiterer vierter Arm vorgesehen und entsprechend mit Einzelteilen vervollständigt, bis hin zu einem Weiteren Basispunkt. Dieser vierte Arm und das zugehörige Meßband werden zu Kontrollzwecken eingesetzt. An sich sind zur Vermessung eines Punktes im Raum nur drei Meßbänder erforderlich. Die Lagerringe 18, 19, 20 sind hier mit Abstand zueinander gelagert, wobei entsprechende Zwischenstücke zur Anwendung kommen. Auf diese Art und Weise entsteht ein Freiraum zwischen den Armen 15, 16 und 17, so daß die Arme trotz der angekoppelten Koppelglieder 26, 31, 36 um die Achse 4 frei verschwenkbar sind. Es können hier anstelle der Rollen Bolzen an den Koppelgliedern 26, 31, 36 vorgesehen sein, so daß die Rollreibung durch Gleitreibung ersetzt ist. Es ist aber auch möglich, die Bahn für das Koppelglied an jedem Arm gleichsam im Mittelbereich des Armes anzuordnen, wie dies in Figur 4 beispielhaft für die Bahn 22 des Armes 16 und das insoweit eingefügte Koppelglied 31 gezeigt ist. In einem solchen Fall kann man auf Zwischenringe zwischen den Lagerringen 18, 19, 20 verzichten, und die Arme sind trotzdem frei und ungehindert um die Achse 4 schwenkbar.

Aus Figur 3 ist ersichtlich, daß sich die Spitze 5 während der dargestellten Messung des Meßpunktes 6, der hier an einer konkav ausgebildeten Oberfläche 7 vorgesehen ist, nicht deckend zum Mittelpunkt 11 der Kugelschalen 12, 13, 14 befindet. Mit anderen Worten ist der Schaft 2 etwas ausgefahren. Um diesen Ausfahrweg festzustellen und während der Messung festzuhalten, ist ein Wegaufnehmer 40 vorgesehen, der bei dem Ausführungsbeispiel der Figur 1 im Innern des Grundkörpers 1 gelagert vorgesehen ist und auf die Bewegung eines vorstehenden Bundes 41 auf dem Schaft 2 anspricht. In Verbindung damit kann am Grundkörper 1 eine oder mehrere (nicht dargestellte) Libellen vorgesehen sein, um in einer solchen Meßsituation die Achse 4 vertikal auszurichten. Es wird dann an sich zunächst der Mittelpunkt 11 (Figur 3) gemessen, und die Koordinaten des eigentlichen zu messenden Punktes 6 ergeben sich dann lediglich in der z-Achse abweichend entsprechend dem von dem Wegaufnehmer 40 gemessenen Weg.

### BEZUGSZEICHENLISTE

- 1: Grundkörper
- 2: Schaft
- 3: Doppelpfeil
- 4: Achse
- 5: Spitze
- 6: Punkt
- 7: Oberfläche
- 8: Feder
- 9: Anschlag
- 10: Anschlag
- 11: Mittelpunkt
- 12: Kugelschale
- 13: Kugelschale
- 14: Kugelschale
- 15: Arm
- 16: Arm
- 17: Arm
- 18: Lagerring
- 19: Lagerring
- 20: Lagerring
- 21: Bahn
- 22: Bahn
- 23: Bahn
- 24: Basispunkt
- 25: Meßband
- 26: Koppelglied
- 27: Befestigungspunkt
- 28: Rolle
- 29: Basispunkt
- 30: Meßband
- 31: Koppelglied
- 32: Befestigungspunkt
- 33: Rolle
- 34: Basispunkt
- 35: Meßband
- 36: Koppelglied
- 37: Befestigungspunkt
- 38: Rolle
- 39: Kontakt
- 40: Wegaufnehmer
- 41: Bund

## Patentansprüche

1. Vorrichtung zum Zusammenfassen mehrerer Meßbandanfänge beim Anpeilen eines im Raum zu vermessenden Punktes (6), mit einem der Handhabung dienenden Grundkörper (1), an dem eine kreisbogenförmig um eine Achse verlaufende Bahn zum Befestigen der entsprechend gekürzten Meßbandanfänge angeordnet ist, dadurch gekennzeichnet, daß am Grundkörper (1) ein in einer Spitze (5) zum Aufsetzen auf den zu vermessenden Punkt (6) endender Schaft (2) vorgesehen ist, daß für jeden Meßbandanfang eine gesonderte, auf einer Kugelschale (12, 13, 14) bewegliche Bahn (21, 22, 23) vorgesehen ist, daß die Bahnen auf den Kugelschalen unterschiedliche Radien um einen gemeinsamen, mit der Spitze (5) des Schaftes (2) zusammenfallenden Kugelmittelpunkt (11) aufweisen, und daß die Meßbandanfänge entsprechend den unterschiedlichen Radien unterschiedlich gekürzt sind.

2. Vorrichtung nach Anspruch 1, dadurch gekennzeichnet, daß die Bahnen (21, 22, 23) auf Armen (15, 16, 17) angeordnet sind, die durch Meridianausschnitte aus den Kugelschalen (12, 13, 14) gebildet sind, und daß die Arme mit Lagerringen (18, 19, 20) fest verbunden sind, die am Grundkörper (1) um die Achse (4) des Schaftes (2) durch seine Spitze (5) drehbar gelagert sind.

3. Vorrichtung nach Anspruch 1 oder 2, dadurch gekennzeichnet, daß der die Spitze (5) tragende Schaft (2) am Grundkörper (1) in Richtung seiner Achse (4) zwischen Anschlägen (9, 10) begrenzt verschiebbar gelagert ist, wobei ein Anschlag (10) zur Fixierung der Spitze (5) des Schaftes (2) im Mittelpunkt (11) der Kugelschalen (12, 13, 14) vorgesehen ist.

4. Vorrichtung nach Anspruch 3, dadurch gekennzeichnet, daß der durch die Anschläge (9, 10) festgelegte begrenzte Hub des die Spitze (5) tragenden Schaftes (2) vom Mittelpunkt (11) der Kugelschalen (12, 13, 14) aus in Richtung auf die dem Grundkörper (1) abgewandte Seite vorgesehen ist.

5. Vorrichtung nach Anspruch 3 oder 4, dadurch gekennzeichnet, daß der den Hub des die Spitze (5) tragenden Schaftes (2) im Mittelpunkt (11) der Kugelschalen (12, 13, 14) begrenzende Anschlag (10) mit einem Kontakt (39) zum Auslösen der Abspeicherung der Meßergebnisse der Meßbänder (25, 30, 35) versehen ist.

6. Vorrichtung nach einem der Ansprüche 3 bis 5, dadurch gekennzeichnet, daß ein Wegaufnehmer (40) zur Feststellung der jeweiligen Entfernung der Spitze (5) des Schaftes (2) vom Mittelpunkt (11) der Kugelschalen (12, 13, 14) vorgesehen ist.

7. Vorrichtung nach einem der Ansprüche 1 bis 6, dadurch gekennzeichnet, daß zwischen den Bahnen (21, 22, 23) der Kugelschalen (12, 13, 14) und den Meßbandanfängen Koppelglieder (26, 31, 36) vorgesehen sind, die mit ihren dem Mittelpunkt (11) der Kugelschalen (12, 13, 14) zugekehrten Enden rollend oder gleitend auf der jeweiligen Bahn (21, 22, 23) jedes Armes (15, 16, 17) gelagert sind und mit ihren anderen Enden in einer gemeinsamen Kugelschale um den Mittelpunkt (11) enden.

8. Vorrichtung nach einem der Ansprüche 1 bis 7, dadurch gekennzeichnet, daß die Arme (15, 16, 17) auf den Kugelschalen (12, 13, 14) jeweils einen das Durchschwenken der an die Bahnen (21, 22, 23) angeschlossenen Meßbänder (25, 30, 35) zulassenden gegenseitigen Abstand aufweisen.

9. Vorrichtung nach einem der Ansprüche 1 bis 7, dadurch gekennzeichnet, daß sich die Arme (15, 16, 17) auf den Kugelschalen (12, 13, 14) etwa über einen Winkel von 90° erstrecken.

10. Vorrichtung nach einem der Ansprüche 1 bis 9, dadurch gekennzeichnet, daß der die Spitze (5) tragende Schaft (2) gegen den Druck einer Feder (8) verschiebbar am Grundkörper (1) gelagert ist, wobei die Kraft der Feder (8) die Spitze (5) des Schaftes (2) von dem Mittelpunkt (11) der Kugelschalen (12, 13, 14) weg belastet.
